# EUROPEAN PATENT APPLICATION

(11) **EP 1 410 928 A1**
(43) Date of publication of application: **21.04.2004**
(21) Application number: 03445113.8
(22) Date of filing: 14.10.2003
(51) Int. Cl.: B60G 17/02, B60G 3/18, B60G 11/16, B66F 9/06

(54) **Suspension device for industrial truck**

(30) Priority: 16.10.2002 SE 0203053
(71) Applicant: BT INDUSTRIES AB, 59581 Mjölby (SE)
(72) Inventor: Franzen, Oscar, Mjölby (SE)
(74) Representative: Berglund, Erik Wilhelm

(57) **Abstract**

Suspension device for trucks, where a wheel supporting unit is suspended moveable height-wise in relation to the frame of the truck, this suspending including an upper swing arm (2) journalled in the frame (4) of the truck and in the wheel supporting unit (1). A spring (9) is arranged between the drive means and a point (7) on the upper swing arm that horizontally is between the inner and outer pivot point of the swing axle and on a radius that is below the connecting line between the pivot point in the frame and the drive means respectively. This result in a movement downward for the drive means (1) giving a diminished torque for the force with which the spring act on the upper swing arm, which counteracts the reduction in spring force due to the extension of the spring (9) so that the resulting spring force can be maintained unchanged.

## Description

At electrical driven industrial trucks that only have one driving wheel and where the stability is improved by one or several additional support wheels it is essential that the driving wheel always is in contact with the ground with a sufficient force to be able to drive and steer the truck. This means that either the drivivg wheel or the supporting wheels in the same end of the truck as the driving wheel must be able to spring in order to allow adaption to an uneven ground or wear of the driving wheel. Otherwise the driving wheel would risk to become hanging in the air making steering as well as driving impossible. In order not to jeopardize the stability the spring movement must at the same time be very short. This in turn means that if the driving wheel spring down into a depression the contact pressure is reduced and thereby essentially the driving and steering ability for the driving wheel. Actually the pressure may be reduced to such an extent that the wheel slip. This is in particular the case if the truck is empty and consequently the total load is less. If the wheel slip it will be additionally worn and in due time one will have a situation where the wheel slip more and more often either due to uneven ground or due to the required drive force due to heavy load becoming larger than the drive wheel can achieve.

In order to remedy the above problems the object of the invention is to achieve a suspension that prevents reduction of the contact pressure when the drive wheel is worn or if this due to uneven ground must spring down.

In accordance with the invention the above object is solved by the arranging of a spring between the drive means and a point on an upper swing arm of the drive means, which point is so located that at the movement downwards of the swing arm, that is a movement downwards of the drive means the lever of spring force on the upper link arm is shortened. At the same time the fastening point of the spring in the swing arm is horizontally located between the fastening point of the swing arm in the frame and its fastening point in the drive means. Practically this is achieved by arranging the connecting point of the spring in the upper swing arm below the line that connects the pivot points of the swing arm in the frame and the drive means respectively.

Since the spring is fastened in the drive means and the upper swing arm the drive means will be subjected to a downwards directed force in the lower end of the spring and a lifting force from the outer end of the upper swing arm. The latter force is however reduced corresponding to the relationship between the torque arm of the connection point of the spring and the length of the swing arm between the pivot points. As the wheel moves downward, for instance due to wear or passes a shallow depression the upper swing arm swings somewhat downward and since the upper fastening point of the spring (in the upper swing arm) is located below the connection point of the pivot point of the swing arm in frame and drive means this point is swung away from the fastening in the drive means and the torque arm of the force with which the force of the spring acts, and the force with which the swing arm tries to lift the drive means upward is reduced, so that despite the extending of the spring that result from the spring being extended at a movement downward for the wheel the contact force of the wheel can remain essentially unchanged.

Since the spring movements are small a position for the fastening point of the spring in the upper swing arm quite simply have to be chosen. The closer this fastening point is placed below the fastening point of the upper swing arm in the fame of the truck the faster the movement laterally of the fastening point of this spring is at a lowering of the wheel.

If so desired the compensation can be made adjustable, for instance by arranging a number of different possible fastening points, so that the suspension can be adapted to for instance different truck weights.

The spring need not necessarily be fastened to the drive means in the lower end but may instead in the lower end be fastened in the outer end of a lower swing arm.

Instead of arranging the suspension according to the invention for a driving wheel it may be arranged at a support wheel.

In order to secure that the drive wheel of a truck gets a sufficient contact pressure for driving and steering when the load is heavy it is known to use the pressure in the load lifting hydraulic cylindert to force the drive wheel against the ground so that the contact pressure of the drive wheel becomes proportional to the weight of the load. The invention function particularly well together with this device and increase the drive wheel pressure when the drive wheel gets worn.

Further advantages and characteristics of the invention are apparent from the following description and the enclosed patent claims respectively.

In the enclosed drawings fig 1 shows a device in accordance with the invention seen from the side in a first spring position and fig 2 the same device with a wheel springing down, fig 3 a diagram of the drive wheel pressure with known technique with a worn and a non worn wheel and fig 4 corresponding measured results at the use of the invention.

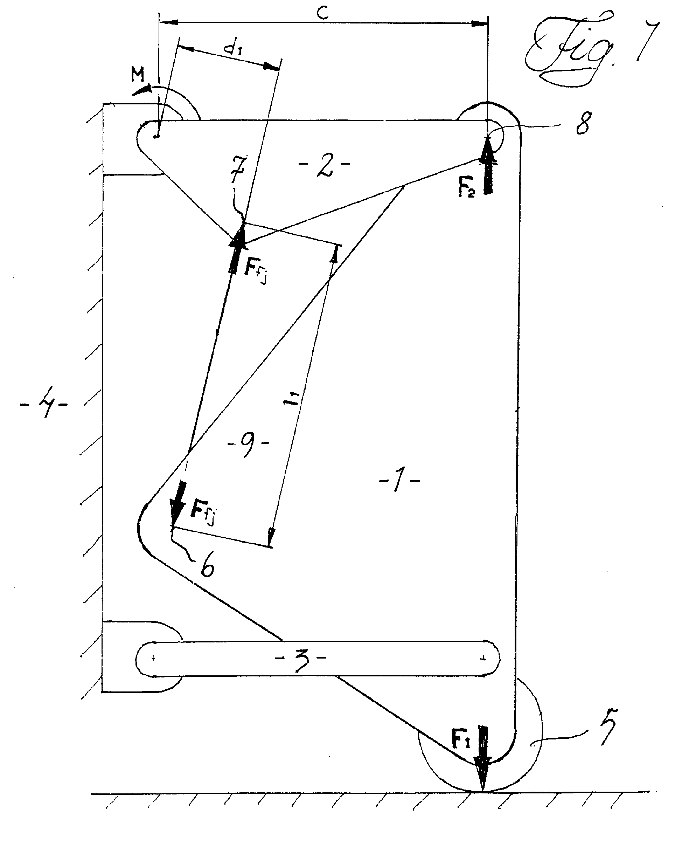

The device shown in fig 1 includes a drive means 1, that is moveable suspended in a truck frame 4 by means of two swing arms, an upper one 2 and a lower one 3. The drive means is provided with a drive wheel 5. between a journal point 6 in the drive means and a journal point 7 in the upper swing arm or link 2 a pressure spring 9 is arranged. In fig 1 the invented device is shown with the swing arms or links 2 and 3 respectively essentially horizontal or straight corresponding to an upper starting position. The pressure spring 9 provides in the lower end a force directed downward acting on the drive means. In the upper end the spring acts on the swing arm 2 with the same force but since the lever (d₁) is less than the lever C of the journal point 8 of the swing arm 2 the total result is a force directed downward.

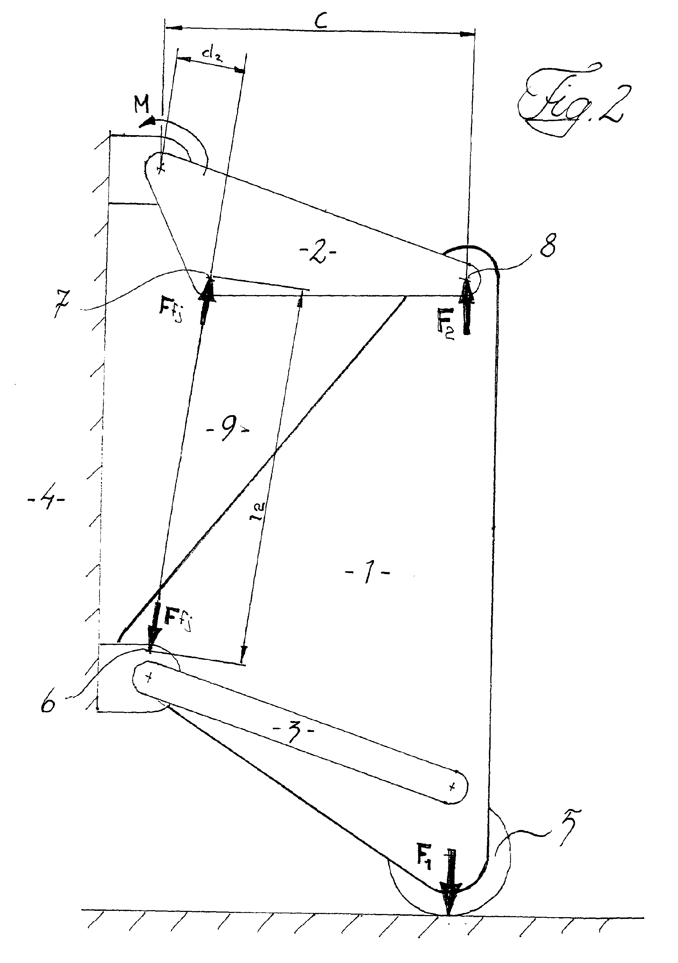

In fig 2 is shown how the drive means of the driving wheel has sprung down due to a depression in the ground or a worn wheel. In order to elucidate an exaggerated displacement downward is shown. Due to the displacement downward of the drive means in relation to the truck frame 4 the spring 9 has been extended, which result in a reduction of the spring force from the spring. At the same time the lever of the influence of the spring force on the upper swing arm 2 is reduced as is apparent from the distance d₂. This means that the transmission ratio of the spring force acting on the swing arm 2 is reduced further and the lifting force in the outer end of the swing arm is thus severely reduced due to the double reducing influence. Although the actual lever length is reduced also for the distance between the journaling of the swing arm in the drive means and the truck frame respectively but this change is considerably less than the reduction in lever of the upper fastening point of the spring since the fastening point of the spring is lower down and therefor moves along a section of its path of movement that has a greater inclination in relation to a vertical line than the pivot point of the drive means in the upper link arm does.

The result of the movement from the position shown in fig 1 to 2 is thus that even if the spring is extended the resulting reduction of spring force is essentially compensated by the reduction of the counteracting force via the upper swing arm and the drive pressure can thus be retained unaltered.

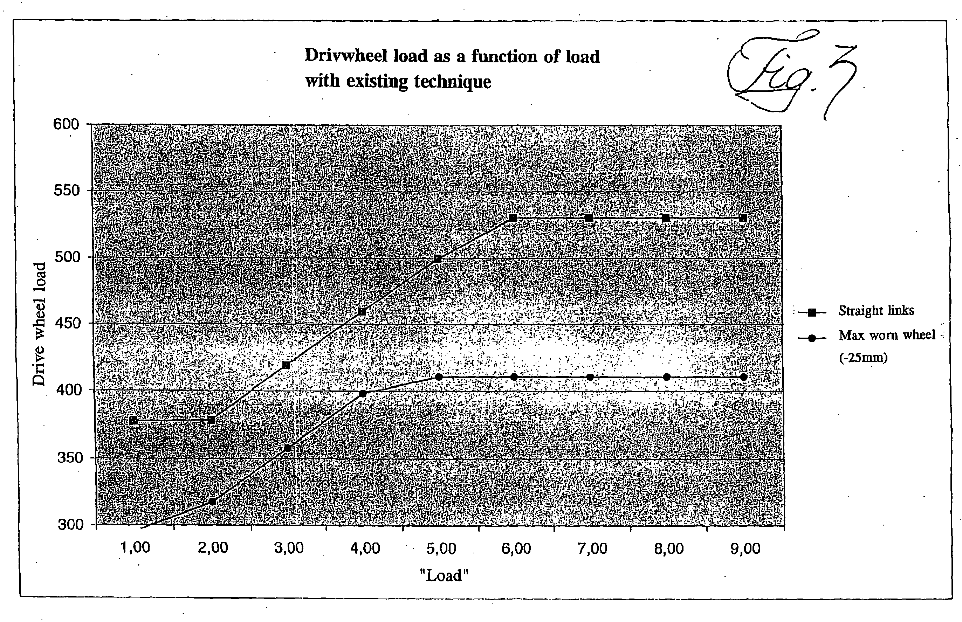

In fig 3 is shown how the contact pressure alters with the size of the load at a position in accordance with fig 1, and in a position corresponding to fig 2, that is with a lowering of the drive wheel at a known wheel suspension for trucks. As can be seen the difference in drive wheel traction is large.

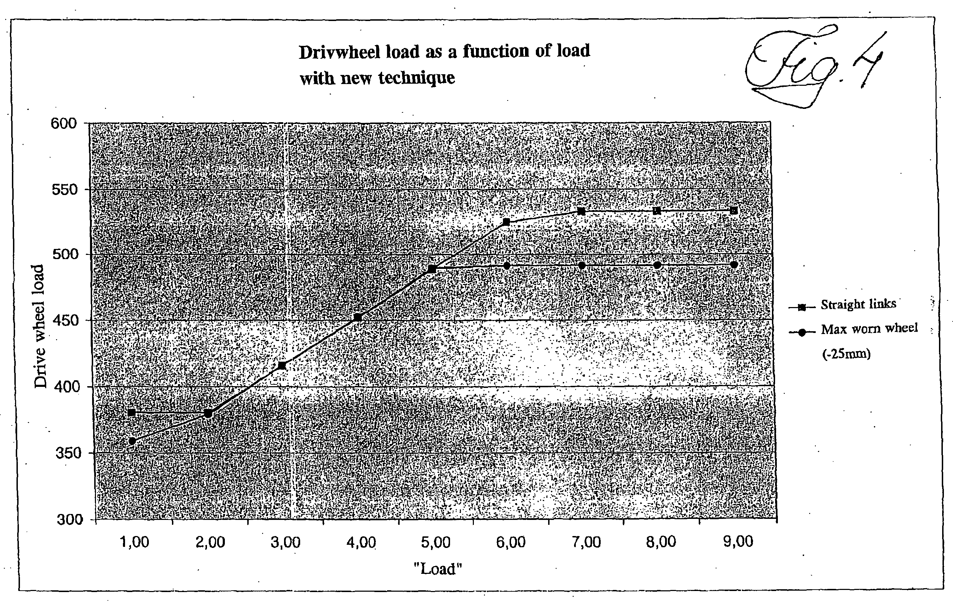

In fig 4 is then shown the result of the same wheel suspension but also provided with the device according to the invention. Also here the resulting contact forces are shown at an unworn as well as a worn wheel. Apparently the difference in available contact pressure and thereby traction is essentially non existing by means of the invention despite wear of uneven ground.

In addition to the invention allowing a retaining of required traction at drive wheel wear as well as uneven ground the truck also becomes more stable when driven on uneven ground.

## Claims

1. Suspension device for trucks, where a unit carrying a wheel, is journalled moveable height-wise in relation to the frame of the truck, this journaling including an upper swing arm (2) journalled in the frame (4) of the truck and in the wheel carrying unit (11), **characterized in that** it includes a spring (9) arranged between the drive means or a part acting thereon and a point (7) on the upper swing arm (2) that horizontally is located between the outer and inner journaling point of the swing axle and on a radius that is below the connecting line between the pivot point in the frame and that in the wheel carrying unit respectively so that a movement downward result in a reduced torque from the force with which the spring acts on the upper swing arm.

2. Device according to claim 1, **characterized in that** the fastening point (7) of the spring in the upper arm (2) is adjustable, for instance through the arranging of a number of mounting holes for the fastening of the spring (9) in the upper swing arm.
